# EUROPEAN PATENT SPECIFICATION

(11) **EP 2 965 379 B1**
(45) Date of publication and mention of the grant of the patent: **08.07.2020**
(21) Application number: 14760372.4
(22) Date of filing: 04.03.2014
(51) Int. Cl.: H01M 10/05, H01M 10/0562, H01M 4/131, H01B 1/02

(54) **ALKALI METAL INTERCALATION MATERIAL AS AN ELECTRODE IN AN ELECTROLYTIC CELL**
ALKALIMETALL-EINLAGERUNGSMATERIAL ALS ELEKTRODE IN EINER ELEKTROLYSEZELLE
MATÉRIAU D'INTERCALATION À BASE DE MÉTAL ALCALIN UTILISÉ COMME ÉLECTRODE DANS UNE CELLULE ÉLECTROLYTIQUE

(30) Priority: 04.03.2013 US 201361772306 P; 04.03.2013 US 201361772356 P
(43) Date of publication of application: 13.01.2016
(73) Proprietor: Enlighten Innovations Inc., Calgary, Alberta T2G 1B1 (CA)
(72) Inventor: BHAVARAJU, Sai, West Jordan, Utah 84088 (US)
(74) Representative: HGF
(86) International application number: PCT/US2014/020392
(87) International publication number: WO 2014/138110

(56) References cited:
- WO-A1-2013/109542
- JP-A- 2005 063 958
- US-A1- 2004 191 617
- US-A1- 2007 172 739
- US-A1- 2011 039 162
- US-A1- 2012 175 267
- US-A1- 2013 004 852

## Description

### FIELD OF THE INVENTION

The present invention relates in general to electrolytic cells. More particularly, the present invention provides an electrolytic cell that includes a solid alkali ion conductive electrolyte membrane and at least one electrode that includes an alkali metal intercalation material. In some instances, the intercalation material includes an alkali metal selected from sodium and lithium.

### BACKGROUND OF THE INVENTION

Electrolytic cells comprising solid alkali ion conductive electrolyte membranes that selectively transport alkali ions are known in the art. By having an alkali ion selective membrane in an electrolytic cell, alkali ions are allowed to pass between the cell's anolyte compartment and catholyte compartment while other chemicals are maintained in their original compartments. Thus, through the use of an alkali ion specific membrane, an electrolytic cell can be engineered to be more efficient and to produce different chemical reactions than would otherwise occur without the membrane.

Solid alkali ion conductive electrolyte membranes are used in electrochemical cells for various reasons, including, but not limited to, for being ion conductive, ion selective, water impermeable, chemically stable, electronically insulating, and for similar reasons. By way of example, NaSICON (Na Super Ion CONducting) membranes selectively transport sodium cations, while LiSICON (Li Super Ion CONducting) membranes selectively transport lithium cations. Other examples of solid alkali ion conductive electrolyte membranes include beta alumina, sodium-conductive glasses, etc.

Electrolytic cells comprising solid alkali ion conductive membranes are used to produce a wide variety of different chemicals and to perform various chemical processes. In some cases, such electrolytic cells convert alkali salts into their corresponding acids. In other cases, such electrolytic cells may also be used to separate alkali metals from mixed alkali salts. Accordingly, some such electrolytic cells can be used to purify metals, such as sodium, lithium, potassium. Electrolytic cells are known from WO2013/109542 or US2013/0004852.

Despite their utility, electrolytic cells comprising solid alkali ion conductive membranes are not necessarily without their shortcomings or challenges. For example, some such electrolytic cells are relatively inefficient. More particularly, some such cells are subject to a relatively high amount of voltage drop between and anode electrode and cathode electrode. Moreover, as some such electrolytic cells can generate low pH acids in the electrolyte compartment and/or high pH bases in the catholyte compartment as the cells function, the contents of such cells can degrade or damage the solid alkali ion conductive membrane, thereby, causing the cell to become less efficient or even inoperable.

Thus, while electrolytic cells comprising a catholyte compartment and an anolyte compartment that are separated by a solid alkali ion-conductive membrane are known, challenges still exist. Accordingly, it would be an improvement in the art to augment or even replace certain conventional electrolytic cells with other electrolytic cells.

### BRIEF SUMMARY OF THE INVENTION

The present invention relates to a solid state alkali metal based secondary battery as disclosed in claim 1.

It will be appreciated by those of skill in the art that rechargeable batteries are often referred to as having positive and negative electrodes. As used herein throughout, "negative electrode" may be used interchangeable with "anode", "positive electrode" may be used interchangeably with "cathode", "negative electrode compartment" may be used interchangeably with "anolyte", and "positive electrode compartment" may be used interchangeably with "catholyte".

The described cell includes an anolyte compartment housing a negative electrode, wherein the negative electrode includes a first alkali metal intercalation material. The cell also includes a catholyte compartment comprising a positive electrode, wherein the positive electrode includes a second alkali metal intercalation material that is different from the first alkali metal intercalation material. Moreover, in such implementations, the cell includes a solid alkali metal ion conductive electrolyte membrane that separates the negative electrode from the positive electrode, wherein the first and the second alkali metal intercalation materials are in direct contact with the electrolyte membrane, and wherein electrolyte membrane is selected from a sodium ion conductive electrolyte membrane and a lithium ion conductive membrane.

The described invention relates to a solid alkali metal ion conductive electrolyte membrane that includes a first surface and a second surface (which is substantially opposite to the first surface), wherein the electrolyte membrane is selected from a sodium ion conductive electrolyte membrane and a lithium ion conductive membrane. In such implementations, a negative electrode, which includes a first alkali metal intercalation material, is attached to the first surface.

These features and advantages of the present invention will become more fully apparent from the following description and appended claims, or may be learned by the practice of the invention as set forth hereinafter.

### BRIEF DESCRIPTION OF THE SEVERAL DRAWINGS

Figure 1 depicts a schematic diagram of an electrolytic cell, wherein the cell comprises an anode electrode that is disposed on a solid alkali ion conductive electrolyte membrane;
Figure 2 depicts a schematic diagram of the cell, wherein the anode is separated from the electrolyte membrane;
Figure 3 depicts a schematic diagram of a representative embodiment of the cell, wherein the anode and a cathode electrode are each disposed on an opposing surface of the electrolyte membrane;
Figure 4 depicts a schematic diagram of the cell, wherein the anode and cathode are each disposed separate from the electrolyte membrane;
Figure 5 depicts a schematic diagram of a representative embodiment of the cell, wherein the cell is used to generate molten sodium in its catholyte compartment;
Figure 6 depicts a schematic diagram of a representative embodiment of an alkali metal based secondary cell, wherein the cell comprises a negative electrode and a positive electrode that each include a different alkali metal intercalation material, and wherein the cell is in the process of being discharged;
Figure 7 depicts a schematic diagram of a representative embodiment of the secondary cell of Figure 1, wherein the cell is in the process of being recharged;
Figure 8 depicts a schematic diagram of the secondary cell, wherein the cell comprises a positive electrode that is separated from an alkali ion conductive electrolyte membrane, and wherein the cell is in the process of being discharged;

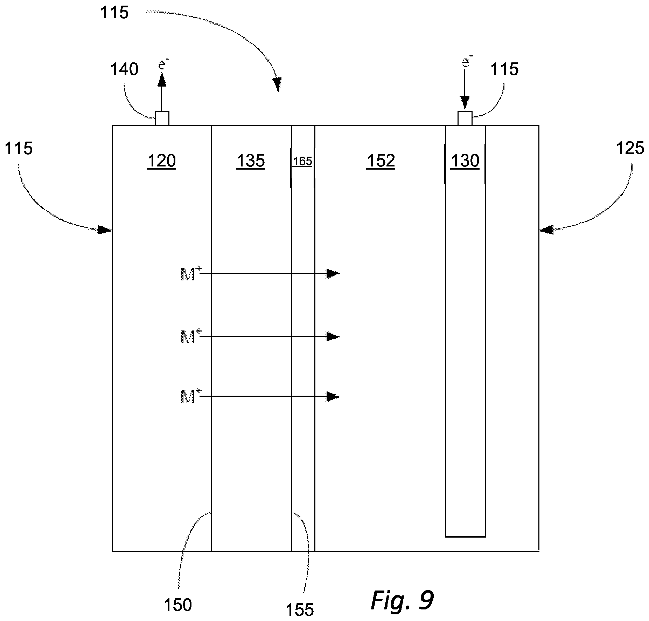

Figure 9 depicts a schematic diagram of the secondary cell, wherein the cell comprises a coating that is coupled to the cell's electrolyte membrane, and wherein the cell is in the process of being discharged;
Figure 10 depicts a schematic diagram of a secondary cell comprising a negative electrode and a positive electrode that are separated from the electrolyte membrane, and wherein electrolyte membrane includes a carbon coating;
Figure 11 depicts a graph illustrating the stability of a layer of carbon coating on a NaSICON membrane;
Figure 12 depicts a graph illustrating that the presence of the carbon coating on the NaSICON membrane does not increase NaSICON resistance; and
Figure 13 depicts a schematic diagram of an experimental electrolytic cell, wherein the negative electrode and the positive electrode in the cell are separated from the electrolyte membrane, and wherein the electrolyte membrane does not include the carbon coating of the cell in Figure 10.

### DETAILED DESCRIPTION OF THE INVENTION

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," "another embodiment," and similar language throughout this specification may, but do not necessarily, all refer to the same embodiment. Additionally, while the following description refers to several embodiments, implementations, and examples of the various components and aspects of the described invention, all of the described embodiments, implementations, and examples are to be considered, in all respects, as illustrative only and not as being limiting in any manner.

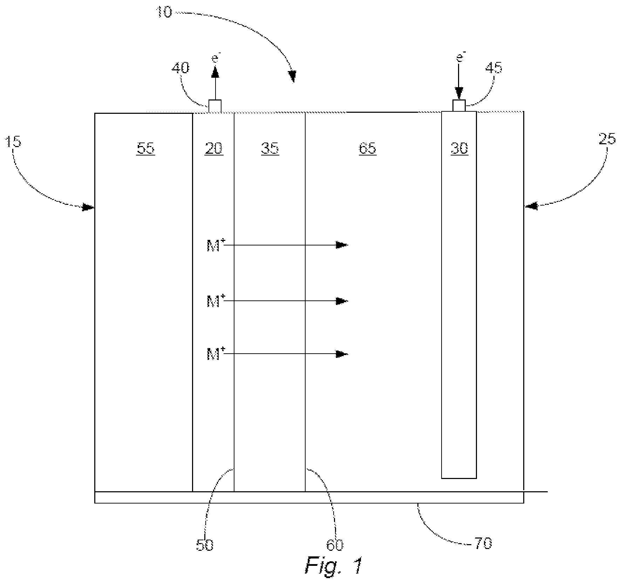

The present invention provides an electrolytic cell that includes a solid alkali ion conductive electrolyte membrane and at least one electrode that includes an alkali metal intercalation material. The electrolytic cell 10 comprises an anolyte compartment 15, which includes an anode electrode 20; a catholyte compartment 25, which comprises a cathode electrode 30; an alkali ion conductive electrolyte membrane 35 that separates the anolyte compartment 15 from the catholyte compartment 25; a first terminal 40; and a second terminal 45. To provide a better understanding of the described cell, a brief description of each of the cell's components shown in Figure 1 is discussed below in more detail.

With regard to the anolyte 15 and catholyte 25 compartments, such compartments can be any suitable shape and have any other suitable characteristic that allows the cell 10 to function as intended. By way of example, the anolyte compartment and the catholyte compartment can each be tubular, rectangular, irregular, or can be any other suitable shape. Furthermore, the two compartments can have any suitable spatial relationship with respect to each other. For instance, while Figure 1 shows an embodiment in which the anolyte compartment 15 and the catholyte compartment 25 are adjacent to each other, in other embodiments (not shown), one compartment (e.g., the anolyte compartment) is disposed (at least partially) within the other compartment (e.g., the catholyte compartment), while the contents of the two compartments remain separated by the alkali ion conductive electrolyte membrane 35 and any other compartmental walls.

The intercalation material of anode 20 comprises a material that causes little to no increase in the resistance of the electrolyte membrane 35 (discussed below). In other words, in some embodiments, the intercalation material readily transports alkali ions there through and has little to no adverse effect on the rate at which alkali ions pass from the anolyte compartment 15 to the catholyte compartment 25.

The intercalation material comprises sodium metal intercalated with a base material, such as carbon (*e.g*., graphite, mesoporous carbon, boron-doped diamond, carbon, and/or graphene). Indeed, in some embodiments, the anode 20 comprises NaₓC₆ (wherein x is between about 0 and about 3).

In other embodiments, the intercalation material in the anode 20 comprises a lithium metal intercalated into and/or onto a base material, such as carbon (*e.g*., graphite, mesoporous carbon, boron-doped diamond, carbon, and/or graphene). Indeed, in some embodiments, the anode 20 comprises LiₓC₆ (wherein x is between about 0 and about 3). Moreover, while the anode can have any suitable configuration, in some embodiments, the anode comprises a coating, wire, felt, plate, tube, mesh, foam, and/or other suitable anode configuration.

The anode 20 is coupled to or disposed on a first side 50 of the membrane 35 that faces the anolyte compartment 15. While having the intercalation material of the anode be disposed on the electrolyte membrane (*e.g*., as a coating) may provide the cell 10 with several features, in some embodiments, by having the intercalation material be disposed on the electrolyte membrane, alkali ions (*e.g*., Na⁺ or Li⁺) can pass directly from the anode and through the electrolyte membrane (*e.g*., as the current is passed between the anode and cathode 30) and into the catholyte compartment 25.

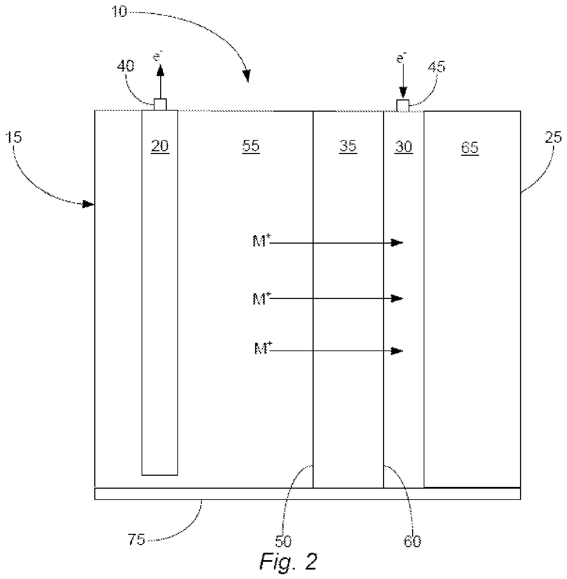

Where the anode 20 comprises the intercalation material, the intercalation material can be coupled to the electrolyte membrane 35 (as shown in Figure 1) or be disposed on, coupled to, or otherwise be formed as part of the anode (as shown in Figure 2) in any suitable manner. Indeed, in some embodiments, the intercalation material of the anode 20 is disposed on the electrolyte membrane and/or anode (*e.g*., an anode substrate) through a method such as chemical vapor deposition ("CVD"), physical vapor deposition ("PVD"), sputtering, casting, pulsed laser deposition, DC magnetron sputtering, molding, extrusion, and/or any other suitable technique that is either capable of disposing the intercalation material of the anode on the electrolyte membrane or that is otherwise capable of forming the anode. Additionally, while the intercalation material can be added to a substrate (*e.g*., the first side 50 of the electrolyte membrane 35, the anode 20, and/or an anode substrate) as a single layer, in some embodiments, 1, 2, 3, 4, 5, 6, 7, 8, 9, 10, or more layers of the intercalation material are added to the substrate to form the anode.

Although, in some embodiments, the intercalation material of the anode 20 comprises an alkali metal (*e.g*., Na or Li) when the anode is formed (*e.g*., when the intercalation material is disposed on the electrolyte membrane 35, an anode substrate, etc.), in other embodiments, the base material (*e.g*., carbon, nickel oxide, manganese oxide, iron phosphate, etc.) of the intercalation material is first coated on the substrate (*e.g*., electrolyte membrane, an anode substrate, etc.) and the alkali metal is then loaded into the base material. While this loading can be accomplished in any suitable manner, in some embodiments, the loading is accomplished before the intercalation material is added to the cell 10 and/or as the cell functions.

In some embodiments, the intercalation material of the anode is as thin as a measurement selected from about 50µm, about 25µm, about 10µm, about 5µm, and about 1µm. In some embodiments, however, the intercalation material of the anode is as thick as a measurement selected from about 55µm, about 100 µm, about 500µm, about 1mm, about 5mm, and about 1cm. In still other embodiments, the thickness of the intercalation material of the anode is between any suitable combination or sub-range of the aforementioned measurements (*e.g*., between about 250µm and about 520µm).

In addition to the anode 20, in some embodiments, the anolyte compartment 15 comprises an anolyte solution 55 (as shown in Figures 1 and 2). In this regard, the anolyte solution can comprise any suitable chemical or chemicals that allow the cell 10 to function and to carry out a desired chemical reaction. Some examples of suitable anolyte solutions include, but are not limited to, aqueous and/or non-aqueous solutions comprising water, formamide, methyl formamide, dimethyl formamide, acetamide, fluoroacetamide, methyl acetamide, 1,2-propanediol, ethylene glycol, 1,3-propylene glycol, Na₂SO₄, NaNO₃, Li₂SO₄, LiNO₃, Nal, Na₂S, NaCl, Lil, Li₂S, and/or LiCl. Indeed, in some embodiments in which the electrolyte membrane 35 is configured to selectively transport sodium ions, the anolyte solution comprises an aqueous solution of Nal, Na₂S, NaCl, Na₂SO₄, and NaNO₃. In contrast, in some embodiments in which the electrolyte membrane is configured to selectively transport lithium ions, the anolyte solution comprises an aqueous solution of Lil, Li₂S, or LiCl.

Turning now to the solid alkali ion selective electrolyte membrane 35, the cell 10 can comprise any solid alkali ion selective electrolyte membrane that allows the cell to effectuate a desired electrochemical reaction. In this regard, the alkali ion conductive electrolyte membrane 35 material may include, but is not limited to, a β"-alumina ceramic electrolyte separator, and an alkali Metal Super Ion Conductive (MeSICON) material, where "Me" represents an alkali metal. Some examples of MeSICON materials include, but are not limited to, ceramic NaSICON type materials (including, without limitation, any suitable known or novel NaSICON material) and LiSICON type materials (including, without limitation, any suitable known or novel LiSICON material). In some embodiments in which the anode 20 comprises an intercalation material that contains sodium (*e.g*., NaₓC₆, where x is between about 0 and about 3), the electrolyte membrane comprises a NaSICON type material. In contrast, in some embodiments in which the anode comprises an intercalation material that contains lithium (*e.g*., LiₓC₆), the electrolyte membrane comprises a LiSICON type material.

With regards now to the cathode electrode 30, the cell 10 can comprise any suitable cathode 30 material that allows the cell to carry out any desired chemical reaction. Some examples of suitable cathode materials include, but are not limited to, a second alkali metal intercalation material that is disposed on a second side 60 (as shown in Figure 2) of the electrolyte membrane 35, nickel, stainless steel alloys, graphite, carbon, titanium, a nickel cobalt ferrous alloy (*e.g*., a KOVAR® alloy), an electro-catalyst (*e.g*., platinum), a molten metal (*e.g*., molten sodium), other known or novel cathode materials, and combinations thereof. In some embodiments, however, the cathode comprises an alkali metal intercalation material.

In embodiments in which the cathode 30 comprises an alkali metal intercalation material, the cathode can comprise any suitable intercalation material that allows the cell 10 to function. In some embodiments in which the electrolyte membrane 35 is selective to sodium ions (*e.g*., comprises a NaSICON type material), the intercalation material used in the cathode 30 comprises sodium intercalated with a base material, such as carbon (*e.g*., graphite, mesoporous carbon, boron-doped diamond, carbon, and/or graphene), nickel oxide, manganese oxide, iron phosphate, etc. In this regard, some examples of suitable sodium intercalation materials that can be used in the cathode include, but are not limited to, NaₓNiO, NaₓMnO₂, NaₓNiO₂, NaₓAlO₂, NaₓCoO₂ (wherein x is between about 0.2 and about 1) and/or NaₓFe_{y}(PO₄)_{z}, (wherein x is between about 0 and about 3, y is about 1, and z is between about 1 and about 3.

In some embodiments in which the electrolyte membrane 35 selectively transports lithium (*e.g*., comprises a LiSICON type material), the cathode 30 comprises a lithium intercalation material. Indeed, in some embodiments in which the electrolyte membrane comprises a lithium selective material, the cathode comprises LiₓNiO, LiₓMnO₂, LiₓCoO₂, LiₓMn₂O₄ (wherein x is between about 0.2 and about 1), and/or LiₓFe_{y}(PO₄)_{z} (wherein x is between about 0 and about 3, y is about 1, and z is between about 1 and about 3).

The cathode 30 is coupled to a second side 60 of the membrane 35 that faces the catholyte compartment 15. In such embodiments, the position of the cathode may provide the cell 10 with several benefits, which may include, without limitation, an efficient way to operate the cell with a relatively small amount of voltage drop between the anode 20 and the cathode. In some other embodiments, the cathode comprises a substrate (*e.g*., a carbon substrate, a wire, mesh, a plate, foam, etc.) that is at least partially coated with the intercalation material.

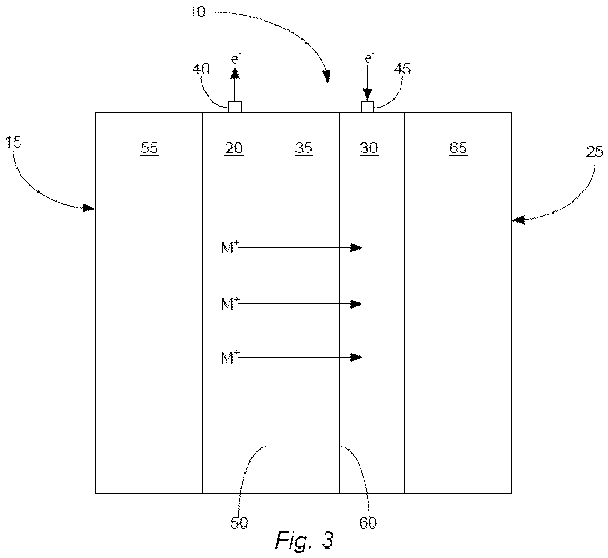

Where the cathode 30 comprises the alkali metal intercalation material, the intercalation material is disposed on the electrolyte membrane 35 (as shown in Figure 3). Indeed, in some embodiments, the intercalation material of the cathode 20 is disposed on a substrate (*e.g*., the second side 60 of the electrolyte membrane, a cathode substrate (*e.g*., a carbon substrate, a wire, mesh, a plate, foam, etc.), through one or more of the methods that are discussed above for forming and/or disposing the intercalation material for the anode 20 (*e.g*., CVD, PVD, sputtering, casting, etc.). Moreover, where the cathode comprises a coating of the intercalation material, the intercalation material can be deposited on a substrate (*e.g*., the electrolyte membrane, a cathode substrate, etc.) in any suitable number of layers, including, without limitation, 1, 2, 3, 4, 5, 6, 7, 8, 9, 10, or more.

Although, in some embodiments in which the cathode 30 comprises an intercalation material, the intercalation material includes an alkali metal (*e.g*., Na or Li) when the material is deposited on a substrate of the catholyte compartment 25 (*e.g*., the second side 60 of the electrolyte membrane 35, a cathode substrate, etc.), in other embodiments, the base material (*e.g*., nickel oxide, manganese oxide, iron phosphate, etc.) of the intercalation material is first coated on the substrate and the alkali metal is then loaded into and/or onto the base material. While this loading can be accomplished in any suitable manner, in some non-limiting embodiments, the loading occurs before the cathode is added to the cell 10, prior to operation of the cell, and/or as the cell operates.

Where the cathode 30 comprises a coating of the intercalation material, the coating of the intercalation material (*e.g*., on the electrolyte membrane 35, cathode substrate, etc.) can be any suitable thickness that allows the cell 10 to function. Indeed, in some embodiments, the intercalation material of the cathode is as thin as a measurement selected from about 50µm, about 25µm, about 10µm, about 5µm, and about 1µm. In some embodiments, however, the intercalation material of the cathode is as thick as a measurement selected from about 55µm, about 100 µm, about 500µm, about 1mm, about 5mm, and about 1cm. In still other embodiments, the intercalation material of the cathode has a thickness between any suitable combination or sub-range of the aforementioned measurements (*e.g*., between about 250µm and about 520µm or between about 10µm and about 5mm).

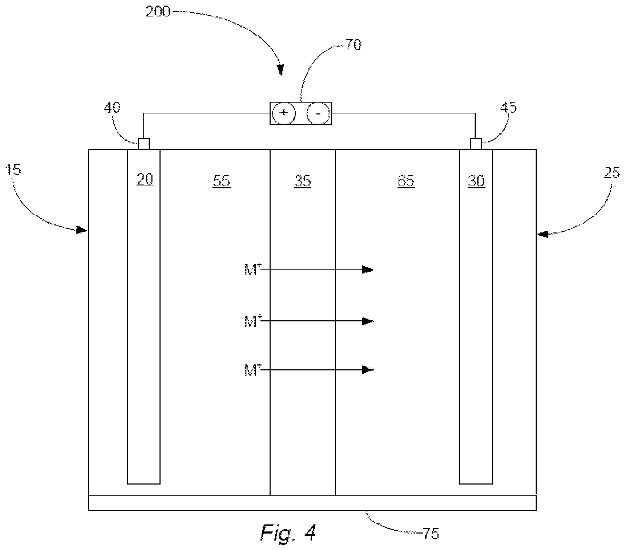

In addition to the cathode 30, in some embodiments (as shown in Figure 4), the catholyte compartment 25 comprises a catholyte solution 65 (or catholyte material). In this regard, the catholyte solution can comprise any suitable chemical or chemicals that allow the cell 10 to carry out a desired chemical reaction. Some examples of suitable materials in the catholyte solution 65 include, but are not limited to, molten sodium, sodium hydroxide, glycerol, water, methanol, borax, sodium tetraborate decahydrate, sodium metaborate tetrahydrate, sodium silicate, boric acid, sodium borohydride, sodium phosphate, sodium hydrogen phosphate, sodium glycerol, sodium carbonate, ethylene, propylene, an ionic liquid (*e.g*., N-methoxyethyl-N-methyl-pyrrolidinium, butylmethyl-pyrrolidinium, propylmethyl-pyrrolidinium, triethyl-sulfonium, diethylmethylsulfonium, ethyl-dimethyl-ammonio-(trimethylammonio)-dihydroborate, pyridinium, pyrrolidinium, quaternary ammonium, quaternary phosphonium, trisulfonium, and sulfonium compounds, etc.), another suitable liquid, and any suitable combination of the foregoing.

With reference now to the terminals 40 and 45 (shown in Figure 4), the cell 10 can comprise any suitable terminals that are capable of electrically connecting the cell with a power source (*e.g*., power source 70, shown in Figure 4). In this regard, the terminals can comprise any suitable material and be any suitable shape and any suitable size. Additionally, the power supply can be any known or novel power supply that is capable of providing a suitable amount of voltage and current between the anode 20 and cathode 30 and that is otherwise suitable for use with an electrolytic cell.

In addition to the aforementioned components, the cell 10 can optionally comprise any other suitable component. In one example (not shown), the cell comprises one or more outlet and/or inlet channels to one or more of the compartments to allow materials to be added to and/or removed from the cell as it functions. In another example, Figure 4 shows an embodiment in which the cell 10 optionally comprises a temperature management system 75. In such embodiments, the cell can comprise any suitable type of temperature management system that is capable of maintaining the cell within a suitable operating temperature range. Some examples of such temperature management systems include, but are not limited to, a heater, a cooler, one or more temperature sensors, and appropriate temperature control circuitry.

Turning now to the manner in which the described cell 10 functions, the cell can function in virtually any suitable manner. In one example, Figure 4 illustrates that as the cell 10 functions and electrons (e⁻) flow from the anode 20 (*e.g*., via the first terminal 40), an alkali metal M, such as Na or Li (*e.g*., from an alkali metal intercalation material present in the anode) is oxidized to form alkali ions (*e.g*., Na⁺ or Li⁺). Figure 4 shows that these alkali ions (M⁺) are then transported through the alkali ion conductive electrolyte membrane 35 and then to the catholyte compartment 25.

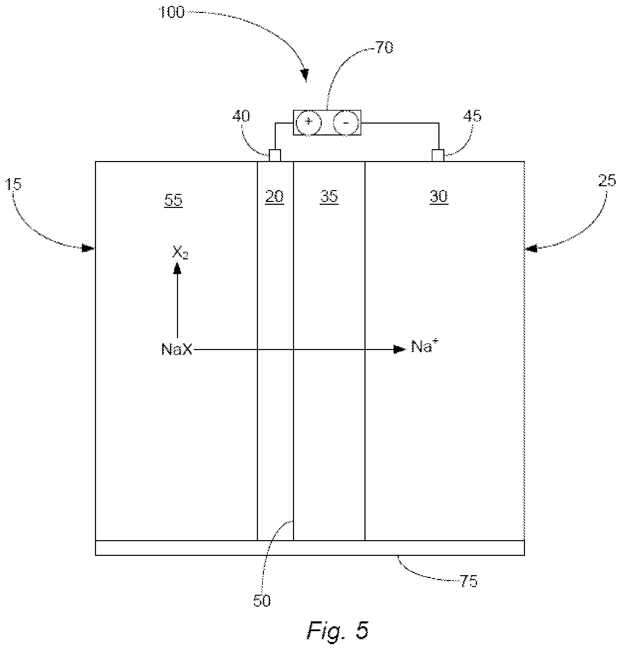

In one non-limiting example of a method for operating the cell 10, Figure 5 shows an embodiment in which a cell 100 is used in to synthesize molten sodium. While such a cell can comprise any suitable component, Figure 5 shows an embodiment in which the cell 100 comprises: an anode 20 that includes an sodium intercalation compound that that is disposed on the first surface 50 of the electrolyte membrane 35 (*e.g*., a NaSICON type membrane); an anolyte solution 55 that includes a sodium containing compound (*e.g*., NaX, wherein X comprises an anion capable of combining with a sodium cation to form an ionic compound, wherein some examples of NaX may include NaS, Na₂S, Nal, NaCl, Na₂SO₄, NaNO₃, etc.); and a molten sodium cathode 30. Figure 5 shows that as the cell 100 operates and the sodium containing solution (*e.g*., NaX) is ionized by the anode 20, sodium cations (*e.g*., Na⁺) are selectively transported to the catholyte compartment 25 where they combine with the molten sodium cathode 30 while the anion (*e.g*., S⁻, I⁻, Cl⁻, etc.) forms a substance that precipitates (*e.g*., in the case of sulfur) or bubbles off (*e.g*., in the case iodine and chorine).

The described cell 10 may function at any suitable operating temperature. In other words, as current passes between the anode 20 and cathode 30, the anode may have any suitable temperature that allows the cell to function. Indeed, in some embodiments where an electrode comprises sodium, the cell functions at an operating temperature below about 100° C, and more particularly below 97° C, or below the melting point of sodium. In other embodiments where an electrode comprises lithium, the cell functions at an operating temperature below about 200° C, and more particularly below 181° C, or below the melting point of lithium.

In addition to the aforementioned advantages and characteristics of the described cell 10, the cell may have several other beneficial characteristics. Indeed, some embodiments of the cell 10 that comprise an electrode (*e.g*., the anode 20) that includes an intercalation material and that is coupled to the electrolyte membrane 35, can operate more efficiently (*e.g*., experience less voltage drop between the anode and the cathode 30) then occurs in some competing electrolytic cells. Additionally, some embodiments of the cell that comprise an electrode (*e.g*., an anode) that includes an intercalation material may be useful (as described above) for the synthesis of molten sodium and/or wide variety of other compounds.

In one embodiment, the cell is a secondary cell or rechargeable battery. As understood by persons skilled in the art, secondary cells can be discharged and recharged and this specification describes cell arrangements and methods for both states. Although the term "recharging" in its various forms implies a second charging, one of skill in the art will understand that discussions regarding recharging would be valid for, and applicable to, the first or initial charge, and vice versa. Thus, for the purposes of this specification, the terms "recharge," "recharged," and "rechargeable" shall be interchangeable with the terms "charge," "charged," and "chargeable," respectively.

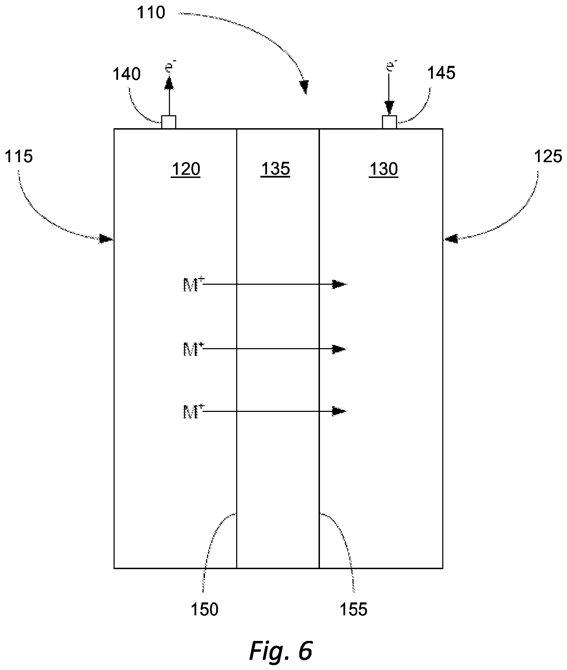

Some disclosed embodiments provide an alkali metal based secondary cell that uses an alkali metal intercalation material as its negative electrode. While the described secondary cell can comprise any suitable component, Figure 6 shows a representative embodiment in which the alkali metal based secondary cell 110 comprises an anolyte compartment 115, which includes a negative electrode 120 comprising a first alkali metal intercalation material; a catholyte compartment 125, which comprises a positive electrode 130 an alkali ion conductive electrolyte membrane 135 that separates the negative electrode 120 from the positive electrode 130; a first terminal 140; and a second terminal 145. To provide a better understanding of the described cell, a brief description of each of the cell's components shown in Figure 6 is discussed below in more detail. Following this discussion, a brief description of how some embodiments of the cell function is provided.

Turning now to the various components of the cell 110, the cell (as mentioned above) can comprise an anolyte compartment 115 and a catholyte compartment 125. In this regard, the two compartments can be any suitable shape and have any other suitable characteristic that allows the cell 110 to function as intended. By way of example, the negative electrode compartment and the positive electrode compartment can each be tubular, rectangular, irregular, or can be any other suitable shape. Furthermore, the two compartments can have any suitable spatial relationship with respect to each other. By way of example, while Figure 6 shows an embodiment in which the negative electrode compartment 115 and the positive electrode compartment 125 are adjacent to each other, in other embodiments (not shown), one compartment (e.g., the negative electrode compartment) is disposed (at least partially) within the other compartment (e.g., the positive electrode compartment), while the contents of the two compartments remain separated by the alkali ion conductive electrolyte membrane 135 and any other compartmental walls.

The intercalation material can comprise any alkali metal containing material that allows the negative electrode to function as an electrode, that also allows alkali metal (*e.g*., Na or Li) in the negative electrode to be oxidized to form alkali ions (Na⁺ or Li⁺) as the cell is discharged, and that also allows alkali ions to be reduced and to intercalate with the intercalation material as the cell is recharged. In some embodiments, the intercalation material comprises a material that causes little to no increase in the resistance of the electrolyte membrane (discussed below). In other words, in some embodiments, the intercalation material readily transports alkali ions there through and has little to no adverse effect on the rate at which alkali ions pass from the negative electrode compartment 115 to the positive electrode compartment 125.

The intercalation material in the negative electrode 120 comprises sodium metal intercalated with carbon (*e.g*., graphite, mesoporous carbon, boron-doped diamond, carbon, and/or graphene). Indeed, in some embodiments, the negative electrode 120 comprises NaₓC₆, NaₓCo₂O₄, and/or sodium intercalated into hard carbon, wherein x is between about 0 and about 3.

In other embodiments, the intercalation material in the negative electrode 120 comprises a lithium metal intercalated into and/or onto carbon (*e.g*., graphite, mesoporous carbon, boron-doped diamond, carbon, and/or graphene). Indeed, in some embodiments, the negative electrode comprises LiₓC₆, wherein x is between about 0 and about 3.

The negative electrode is disposed on or coupled to a first side 150 (as shown in Figure 6) of the membrane that faces the negative electrode compartment 115. While having the intercalation material of the negative electrode be coupled to the electrolyte membrane may provide the cell 110 with several features, in some embodiments, by having the intercalation material be coupled to the electrolyte membrane, alkali ions (*e.g*., Na⁺ or Li⁺) can pass directly from the negative electrode and through the electrolyte membrane (*e.g*., as the cell is discharged) and directly from the electrolyte membrane, back to the negative electrode (*e.g*., as the cell is recharged).

Where the negative electrode 120 is coupled to the electrolyte membrane 135, the negative electrode can be coupled to the electrolyte membrane in any suitable manner. Indeed, in some embodiments, the intercalation material of the negative electrode 120 is disposed on the electrolyte membrane through a method such as chemical vapor deposition ("CVD"), physical vapor deposition ("PVD"), sputtering, casting, pulsed laser deposition, DC magnetron sputtering, and/or any other suitable technique that is capable of coupling the intercalation material of the negative electrode to the electrolyte membrane. Additionally, while the intercalation material can be added to the electrolyte membrane as a single layer, in some embodiments, 1, 2, 3, 4, 5, 6, 7, 8, 9, 10, or more layers of the intercalation material are added to the first side 50 of the electrolyte membrane.

Although, in some embodiments, the intercalation material of the negative electrode 120 comprises an alkali metal (*e.g*., Na or Li) when the material is coupled to the electrolyte membrane 135, in other embodiments, the base material (*e.g*., carbon) of the intercalation material is first coated on the electrolyte membrane and the alkali metal is then loaded into the base material. While this loading can be accomplished in any suitable manner, in some non-limiting embodiments, the loading occurs during fabrication of the negative electrode, prior to operation of the cell and/or as the cell operates.

Where the intercalation material of the negative electrode 120 is coupled to the electrolyte membrane 135, the intercalation material (as a whole) can be any suitable thickness that allows the cell 110 to function. Indeed, in some embodiments, the intercalation material of the negative electrode is as thin as a measurement selected from about 50µm, about 25µm, about 10µm, and about 5µm, and about 1µm. In some embodiments, however, the intercalation material of the negative electrode is as thick as a measurement selected from about 55µm, about 100µm, about 500µm, about 1mm, about 5mm, and about 1cm. In still other embodiments, the thickness of the intercalation material of the negative electrode is between any suitable combination or sub-range of the aforementioned measurements (*e.g*., between about 250µm and about 500µm).

In addition to the negative electrode 120, the negative electrode compartment 115 further comprises a negative electrolyte solution. The negative electrolyte solution can comprise any suitable chemical or chemicals that allow the cell 110 to function.

As previously mentioned, the cell 110 also comprises a solid alkali ion selective electrolyte membrane 135. In this regard, the alkali ion conductive electrolyte membrane 135 material may include, but is not limited to, a β"-alumina ceramic electrolyte separator, and an alkali Metal Super Ion Conductive (MeSICON) material, where "Me" represents an alkali metal. Some examples of MeSICON materials include, but are not limited to, ceramic NaSICON-type materials (including, without limitation, any suitable known or novel NaSICON material) and LiSICON-type materials (including, without limitation, any suitable known or novel LiSICON material). In some embodiments in which the negative electrode 120 comprises an intercalation material that contains sodium (*e.g*., NaₓC₆, wherein x is between about 0 and about 3), the electrolyte membrane comprises a NaSICON-type material. In contrast, in some embodiments in which the negative electrode comprises an intercalation material that contains lithium (*e.g*., LiₓC₆), the electrolyte membrane comprises a LiSICON-type material.

With regards now to the positive electrode 130, the cell 110 can comprise any suitable positive electrode 130 that allows the cell to be charged and discharged as intended. Some examples of suitable positive electrodes include, but are not limited to, a second alkali metal intercalation material that is coupled to a second side 155 (as shown in Figure 6) of the electrolyte membrane 135 and an electrode material that is separated from the electrolyte membrane.

In embodiments in which the positive electrode 130 comprises a second alkali metal intercalation material that is coupled to the second side 155 of the electrolyte membrane 135, the positive electrode can comprise any suitable intercalation material that allows the cell to function and that is different (*e.g*., has a different potential) than the first intercalation material that is used in the negative electrode 120. Accordingly, in some embodiments, the described cell 110 comprises a solid state rechargeable battery.

In some embodiments, in which the negative electrode 120 comprises a sodium intercalation material (*e.g*., NaₓC₆), the second intercalation material used in the positive electrode 130 also comprises sodium. In this regard, some examples of suitable sodium intercalation materials that can be used in the positive electrode include, but are not limited to, NaₓNiO, NaₓMnO₂, NaₓNiO₂, NaₓAlO₂, NaₓCoO₂ (wherein x is between about 0.2 and about 1) and/or NaₓFe_{y}(PO₄)_{z} (wherein x is between about 0 and about 3, y is about 1 and z is between about 1 and about 3). Indeed, in some embodiments in which the negative electrode comprises NaₓC₆, the positive electrode comprises NaₓMnO₂.

In some embodiments in which the negative electrode 120 comprises a lithium intercalation material (*e.g*., LiₓC₆), the positive electrode 130 comprises a second lithium intercalation material, which is different than the first. Indeed, in some embodiments in which the negative electrode comprises a lithium intercalation material (*e.g*., LiₓC₆), the positive electrode comprises LiₓNiO, LiₓMnO₂, LiₓCoO₂, LiₓMn₂O₄ (wherein x is between about 0.2 and about 1) and/or LiₓFe_{y}(PO₄)_{z} (wherein x is between about 0 and about 3, y is about 1 and z is between about 1 and about 3). Indeed, in some embodiments in which the negative electrode comprises LiₓC₆, the positive electrode comprises LiₓMnO₂.

Where the positive electrode 130 comprises the second alkali metal intercalation material, and where such material is coupled to the second side 155 of the electrolyte membrane 135, the positive electrode can be coupled to the electrolyte membrane in any suitable manner. Indeed, in some embodiments, the intercalation material of the positive electrode 130 is disposed on the electrolyte membrane through one or more of the methods that are used to couple the first intercalation material of the negative electrode 120 to the first side 150 of the electrolyte membrane (*e.g*., via CVD, PVD, sputtering, casting, etc.). Moreover, the second intercalation material can be deposited on the second side of the electrolyte membrane in any suitable number of layers, including, without limitation, 1, 2, 3, 4, 5, 6, 7, 8, 9, 10, or more.

Although in some embodiments, the intercalation material of the positive electrode 130 comprises an alkali metal (*e.g*., Na or Li) when the material is coupled to the second side 155 of the electrolyte membrane 135, in other embodiments, the base material (*e.g*., nickel oxide, manganese oxide, iron phosphate, etc.) of the second intercalation material is first coated on the electrolyte membrane and the alkali metal is then loaded into and/or onto the base material. While this loading can be accomplished in any suitable manner, in some non-limiting embodiments, the loading occurs during fabrication of the positive electrode, prior to operation of the cell and/or as the cell operates.

Where the second intercalation material of the positive electrode 130 is coupled to the electrolyte membrane 135, the second intercalation material can be any suitable thickness that allows the cell 110 to function. Indeed, in some embodiments, the intercalation material of the positive electrode is as thin as a measurement selected from about 50µm, about 25µm, about 10µm, and about 5µm, and about 1µm. In some embodiments, however, the intercalation material of the positive electrode is as thick as a measurement selected from about 55µm, about 100µm, about 500µm, about 1mm, and about 5mm, and about 1cm. In still other embodiments, the second intercalation material of the positive electrode has a thickness between any suitable combination or sub-range of the aforementioned measurements (*e.g*., between about 250µm and about 500µm or between about 10µm and about 5mm).

In some embodiments, instead of using a second alkali metal intercalation material as the positive electrode 130, the described cell can comprise virtually any other known or novel positive electrode material that allows the battery to be discharged and charged. Indeed, in some embodiments, the positive electrode comprises a wire, felt, plate, tube, mesh, foam, and/or other suitable positive electrode configuration in which the positive electrode is separated from the electrolyte membrane 135. Furthermore, in some embodiments, the positive electrode comprises a material selected from, but not limited to, a nickel foam, a sodium composite that is not molten at the cell's operating temperature (including, without limitation, a sodium/sulfur material), nickel hydroxide (Ni(OH)₂) (*e.g*., when the cell is at least partially discharged), nickel oxyhydroxide (NiOOH) (*e.g*., when the cell is at least partially charged), and/or another suitable material.

The positive electrolyte can comprise any suitable alkali ion conductive material that allows the cell 110 to function as intended. Some examples of suitable materials in the positive electrolyte solution 152 include, but are not limited to, sodium hydroxide, glycerol, water, borax, sodium tetraborate decahydrate, sodium metaborate tetrahydrate, sodium silicate, boric acid, sodium borohydride, sodium phosphate, sodium hydrogen phosphate, sodium glycerol, sodium carbonate, ethylene, propylene, an ionic liquid (*e.g*., N-methoxyethyl-N-methyl-pyrrolidinium, butylmethyl-pyrrolidinium, propylmethyl-pyrrolidinium, triethyl-sulfonium, diethylmethylsulfonium, ethyl-dimethyl-ammonio-(trimethylammonio)-dihydroborate, pyridinium, pyrrolidinium, quaternary ammonium, quaternary phosphonium, trisulfonium, and sulfonium compounds, etc.), another suitable liquid, and any suitable combination of the foregoing.

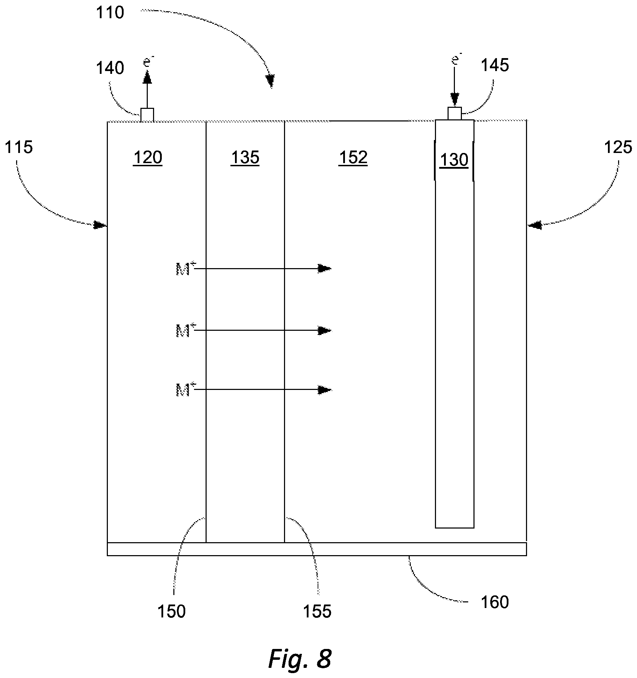

With reference now to the terminals 140 and 145 (shown in Figure 8), the cell 10 can comprise any suitable terminals that are capable of electrically connecting the cell with an external circuit, including, without limitation, to one or more other cells. In this regard, the terminals can comprise any suitable material and any suitable shape of any suitable size.

In addition to the aforementioned components, the cell 110 can optionally comprise any other suitable component. By way of non-limiting illustration, Figure 8 shows an embodiment in which the cell 110 optionally comprises a temperature management system 160. In such embodiments, the cell can comprise any suitable type of temperature management system that is capable of maintaining the cell within a suitable operating temperature range. Some examples of such temperature management systems include, but are not limited to, a heater, a cooler, one or more temperature sensors, and appropriate temperature control circuitry.

Turning now to the manner in which the described secondary cell 110 functions, the cell can function in virtually any suitable manner. In one example, Figure 6 illustrates that as the cell 110 is discharged and electrons (e⁻) flow from the negative electrode 120 (*e.g*., via the first terminal 140), an alkali metal M, such as Na or Li, in the negative electrode is oxidized to form alkali ions (*e.g*., Na⁺ or Li⁺). Figure 6 shows that these alkali ions (M⁺) are transported from the negative electrode 120, through the alkali ion conductive electrolyte membrane 135, and then to the positive electrode compartment 125 (*e.g*., into the positive electrode 130 and/or the positive electrolyte solution 152). For instance, in some embodiments in which the cell comprises a negative electrode comprising NaₓC₆ and a positive electrode comprising NaₓMnO₂, the negative electrode gives sodium ions to the positive electrode as the cell discharges.

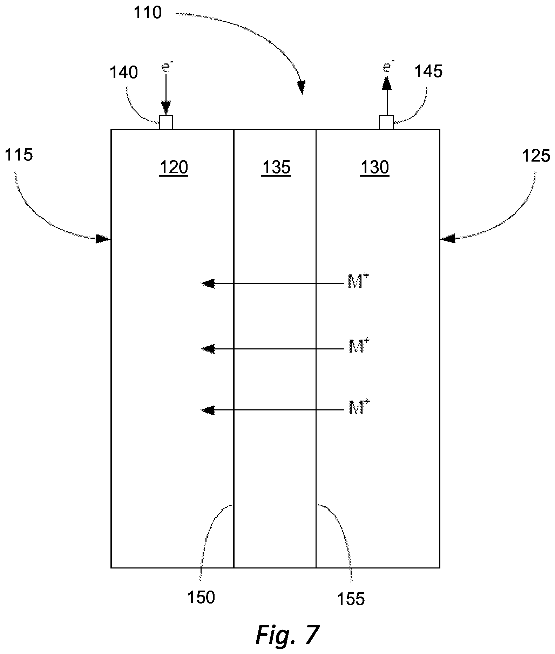

In a contrasting example, Figure 7 shows that as the described secondary cell 110 is recharged and electrons (e⁻) flow into the negative electrode 120 (*e.g*., via the first terminal 140) from an external power source (not shown), such as a recharger, the chemical reactions that occurred when the cell was discharged (as shown in Figure 6) are reversed. Specifically, Figure 7 shows that as the cell 110 is recharged, alkali ions (Na⁺ or Li⁺) are transported from the positive electrode compartment 125 (*e.g*., from the positive electrode 130), through the alkali ion conductive electrolyte membrane 135, and to the negative electrode 120, where the alkali ions are reduced and intercalated back into or onto the negative electrode 120. For instance, in some embodiments in which the cell comprises a negative electrode comprising NaₓC₆ and a positive electrode comprising NaₓMnO₂, the positive electrode gives sodium ions to the negative electrode as the cell recharges.

In one non-limiting example, the positive electrode 30 half-reaction for the cell 110 (with charging being forward) is: LiCoO₂ ↔ Li₁₋ₙCoO₂ + *n*Li⁺ + *n*e⁻, wherein the negative electrode 120 half-reaction is *n*Li⁺ + *n*e⁻ + C ↔ LiₙC.

The described cell 110 may function at any suitable operating temperature. In other words, as the cell is discharged and/or recharged, the negative electrode 120 may have any suitable temperature that allows it to remain solid. Indeed, in some embodiments where an electrode comprises sodium, the cell functions at an operating temperature below about 100° C, and more particularly below 97° C, or below the melting point of sodium. In other embodiments where an electrode comprises lithium, the cell functions at an operating temperature below about 200° C, and more particularly below 181° C, or below the melting point of lithium.

In addition to the aforementioned advantages and characteristics of the described cell 10, the cell may have several other beneficial characteristics. In one example, as the negative electrode 120 comprises an alkali metal intercalation material (*e.g*., NaₓC₆ or LiₓC₆) that is solid as the cell functions, some embodiments of cell function at relatively low temperatures. As a result, such embodiments of the cell may require little to no energy to heat and/or dissipate heat from the cell as the cell functions. Additionally, because the cell can operate at a lower temperature than certain conventional rechargeable batteries that comprise a molten negative electrode, the cell may be less dangerous to use or handle. In still another example, because some embodiments of the cell may be recharged multiple times, do not release hazardous chemicals as it functions, and require less thermal energy than some conventional batteries, such embodiments of the cell may be relatively environmentally friendly.

The following examples are given to illustrate the functionality of the electrolyte membrane 35 when the membrane is coated with a layer of carbon, which may serve (or be modified to serve) as an intercalation material. These examples are given by way of illustration only, and it is understood that the following examples are not comprehensive or exhaustive of the many types of embodiments of the present invention that can be prepared in accordance with the present invention.

### Example 1

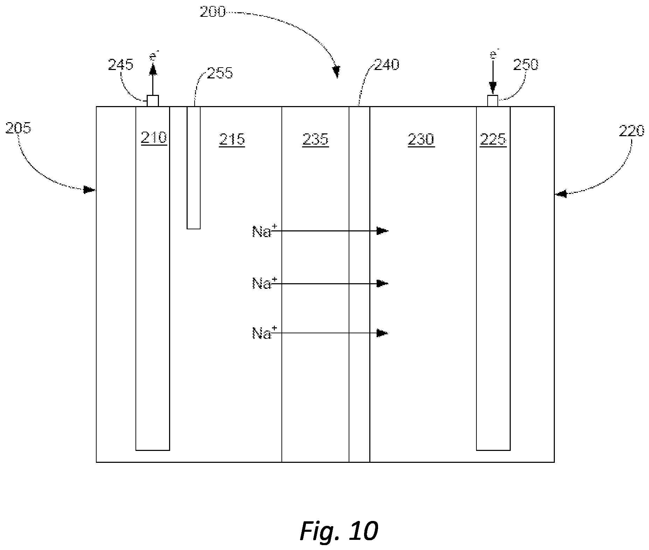

In this example, an electrolytic cell (*e.g*., a rechargeable battery) 200 was constructed to include components similar to those in Figure 10. Specifically, the cell 10 was constructed to include an anolyte compartment 205 housing a nickel wire anode 210 that is in contact with negative electrolyte solution 215 containing ethylene glycol and NaI at a 38% concentration, by weight. Moreover, the cell was constructed to include a cathode compartment 220 housing a nickel oxyhydroxide cathode 225 disposed in a positive electrolyte solution 230 comprising an aqueous solution that includes borax at a 30% concentration, by weight. Additionally, Figure 10 shows that cell 200 further comprises a NaSICON membrane 235 comprising a layer of carbon 240 facing the cathode 225. Also, Figure 10 shows that the cell 200 includes a first terminal 245, a second terminal 250, and a platinum reference 255.

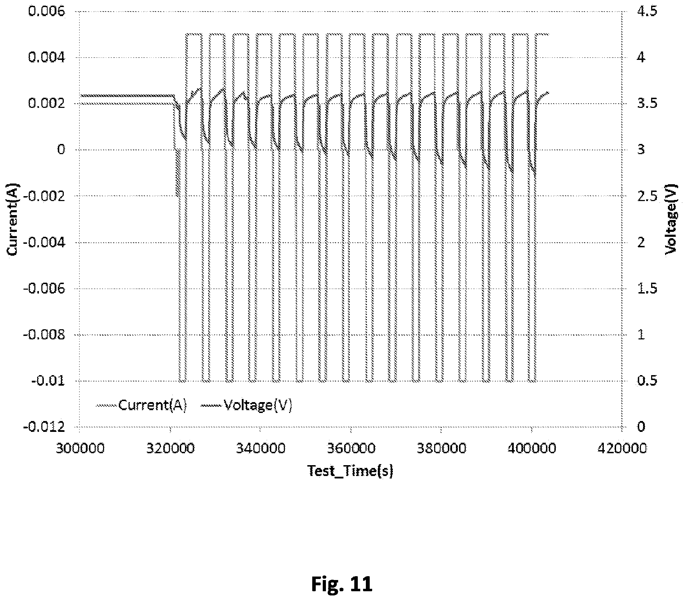

The graph in Figure 11 shows that when the cell 200 was charged and discharged at 90° C over a period of three weeks, the carbon layer 240 substantially maintained its stability in the borax solution 230.

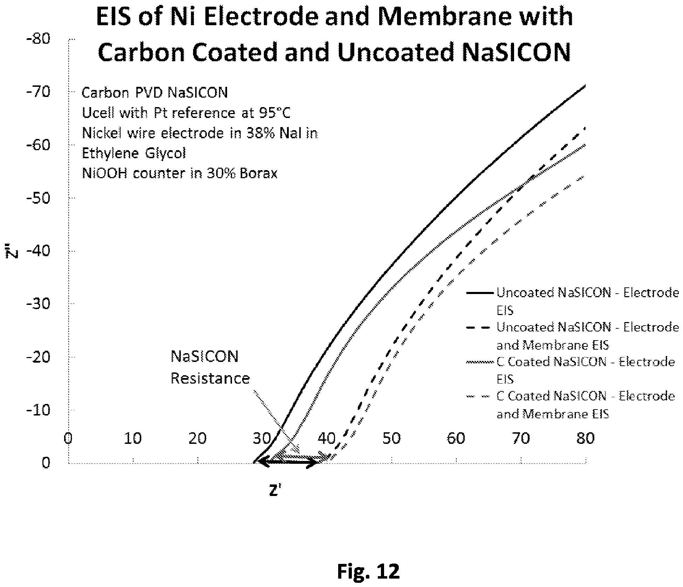

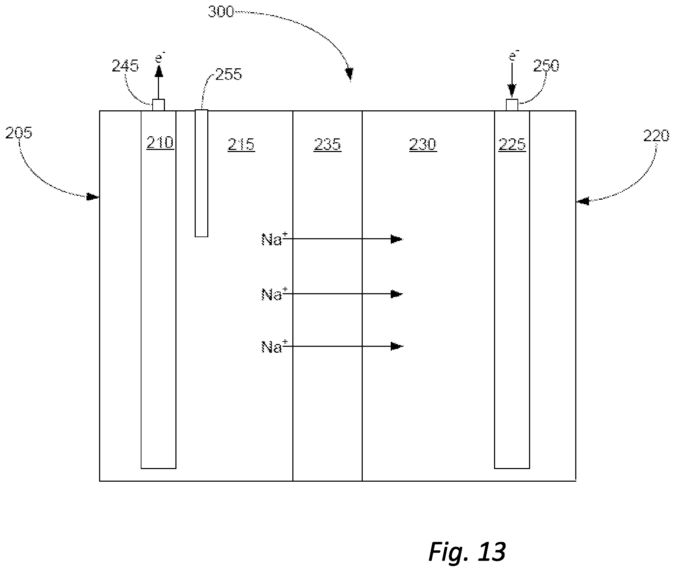

Figure 12 further shows that when the operation of the cell 200 of Figure 10 was compared (via electrochemical impedance spectroscopy, "EIS") to the cell 300 of Figure 13 (which has the same setup of the cell 200 in Figure 10, but lacks the carbon layer 240), the cell 200 of Figure 10 with the carbon layer 240 did not have a higher resistance than the cell 300 of Figure 13, which lacked the carbon layer. In this regard, line 305 represents the EIS measurements of the electrode in the cell 300 with the uncoated NaSICON 235, line 310 represents the EIS measurements of the electrode and membrane 235 in the cell 300 with the uncoated NaSICON 235, line 315 represents the EIS measurements of the electrode in the cell 200 with the coated NaSICON 235, and line 320 represents the EIS measurements of the electrode and membrane 235 in the cell 200 with the uncoated NaSICON 235. Accordingly, Figure 12 shows that, contrary to expectations, the carbon coating 240 in the cell 200 had little to no adverse effect on the cell's function. Accordingly, it is theorized that an electrode (*e.g*., an anode 20 and/or cathode 30) that comprises an alkali metal intercalation material having a base material (e.g., carbon) will have little to no adverse effect on the cell's function.

## Claims

1. A solid state alkali metal based secondary cell, comprising:
an anolyte compartment (15, 115) comprising a negative electrode (20, 120), wherein the negative electrode consists of a carbon-based first alkali metal intercalation material;
a catholyte compartment (25, 125) comprising a positive electrode (30, 130), wherein the positive electrode consists of a second alkali metal intercalation material that is different than the first alkali metal intercalation material; and
a solid alkali metal ion conductive ceramic electrolyte membrane (35, 135) that separates the negative electrode from the positive electrode, wherein the negative electrode is in direct contact with a first side of the electrolyte membrane, wherein the positive electrode is in direct contact with a second side of the electrolyte membrane that is substantially opposite to the first side, and wherein the electrolyte membrane is selected from the group consisting of a sodium ion conductive ceramic NaSICON-type material and a lithium ion ceramic LiSICON-type material.

2. The secondary cell of claim 1,
wherein the second alkali metal intercalation material is selected from NaₓNiO, NaₓMnO₂, NaₓNiO₂, NaₓAlO₂, NaₓCoO₂, and NaₓFePO₄, wherein 0.2 ≤ x ≤ 1.

3. The secondary cell of claim 1 or claim 2, wherein the first alkali metal intercalation material comprises NaₓC₆, wherein x ≤ 3.

4. The secondary cell of claim 1 or claim 2, wherein the first alkali metal intercalation material comprises LiₓC₆, wherein x ≤ 3.

5. The secondary cell of any of claims 1 to 4, further comprising a carbon layer disposed on the second side of the electrolyte membrane, opposite to the first side.

## Patentansprüche

1. Sekundärzelle auf Basis eines Festkörper-Alkalimetalls, umfassend:
eine Anolytkammer (15, 115), die eine negative Elektrode (20, 120) umfasst, wobei die negative Elektrode aus einem ersten Alkalimetall-Interkalationsmaterial auf Kohlenstoffbasis besteht;
eine Katholytkammer (25, 125), die eine positive Elektrode (30, 130) umfasst, wobei die positive Elektrode aus einem zweiten Alkalimetall-Interkalationsmaterial besteht, das sich von dem ersten Alkalimetall-Interkalationsmaterial unterscheidet; und
eine feste Alkalimetall-Ionen-Ieitfähige keramische Elektrolytmembran (35, 135), welche die negative Elektrode von der positiven Elektrode trennt, wobei sich die negative Elektrode in direktem Kontakt mit einer ersten Seite der Elektrolytmembran befindet, wobei sich die positive Elektrode in direktem Kontakt mit einer zweiten Seite der Elektrolytmembran befindet, die im Wesentlichen der ersten Seite gegenüber liegt, und wobei die Elektrolytmembran ausgewählt ist aus der Gruppe bestehend aus einem Natrium-Ionen-Ieitfähigen keramischen NaSICON-Material und einem Lithium-Ionen-Keramik-LiSICON-Material.

2. Sekundärzelle nach Anspruch 1,
wobei das zweite Alkalimetall-Interkalationsmaterial ausgewählt ist aus NaₓNiO, NaₓMnO₂, NaₓNiO₂, NaₓAlO₂, NaₓCoO₂ und NaₓFePO₄, mit 0,2 ≤ x ≤ 1.

3. Sekundärzelle nach Anspruch 1 oder Anspruch 2, wobei das erste Alkalimetall-Interkalationsmaterial NaₓC₆ umfasst, mit x ≤ 3.

4. Sekundärzelle nach Anspruch 1 oder Anspruch 2, wobei das erste Alkalimetall-Interkalationsmaterial LiₓC₆ umfasst, mit x ≤ 3.

5. Sekundärzelle nach einem der Ansprüche 1 bis 4, ferner umfassend eine Kohlenstoffschicht, die sich auf der zweiten Seite der Elektrolytmembran befindet, gegenüber der ersten Seite.

## Revendications

1. Cellule secondaire à l'état solide à base de métal alcalin, comprenant :
un compartiment d'anolyte (15, 115) comprenant une électrode négative (20, 120), l'électrode négative étant constituée d'un premier matériau d'intercalation de métal alcalin à base de carbone ;
un compartiment de catholyte (25, 125) comprenant une électrode positive (30, 130), l'électrode positive étant constituée d'un second matériau d'intercalation de métal alcalin qui est différent du premier matériau d'intercalation de métal alcalin ; et
une membrane électrolytique céramique solide conductrice d'ions de métaux alcalins (35, 135) qui sépare l'électrode négative de l'électrode positive, l'électrode négative étant en contact direct avec un premier côté de la membrane électrolytique, l'électrode positive étant en contact direct avec un second côté de la membrane électrolytique qui est sensiblement opposé au premier côté, et la membrane électrolytique étant choisie dans le groupe constitué par un matériau céramique conducteur d'ions sodium de type NaSICON et un matériau céramique à ions lithium de type LiSICON.

2. Cellule secondaire selon la revendication 1,
le second matériau d'intercalation de métal alcalin étant choisi parmi NaₓNiO, NaₓMnO₂, NaₓNiO₂, NaₓAlO₂, NaₓCoO₂, et NaₓFePO₄, où 0,2 ≤ x ≤ 1.

3. Cellule secondaire selon la revendication 1 ou 2, le premier matériau d'intercalation de métal alcalin comprenant NaₓC₆, où x ≤ 3.

4. Cellule secondaire selon la revendication 1 ou 2, le premier matériau d'intercalation de métal alcalin comprenant LiₓC₆, où x ≤ 3.

5. Cellule secondaire selon l'une quelconque des revendications 1 à 4, comprenant en outre une couche de carbone disposée sur le second côté de la membrane électrolytique, à l'opposé du premier côté.
